# EUROPÄISCHE PATENTSCHRIFT

(11) **EP 1 386 205 B1**
(45) Veröffentlichungstag und Bekanntmachung des Hinweises auf die Patenterteilung: **09.08.2006**
(21) Anmeldenummer: 02735316.8
(22) Anmeldetag: 27.04.2002
(51) Int. Cl.: G05D 23/13

(54) **Vorrichtung zum Regeln bzw.Steuern des Flusses von zwei fliessfähigen Medien und Verwendung der Vorrichtung in der Sanitärtechnik**
Device for regulating resp. controlling the flow of two free-flowing media and use of the device in the sanitary field
Dispositif pour respectivement réguler ou commander le débit de deux substances fluides et utilisation de ce dispositif dans les installations sanitaires

(30) Priorität: 11.05.2001 CH 8572001
(43) Veröffentlichungstag der Anmeldung: 04.02.2004
(73) Patentinhaber: Lang, Edo, 7203 Trimmis (CH); Obrist, Roland, 7412 Scharans (CH)
(72) Erfinder: Lang, Edo, 7203 Trimmis (CH); Obrist, Roland, 7412 Scharans (CH)
(74) Vertreter: OK pat AG
(86) Internationale Anmeldenummer: PCT/EP2002/004692
(87) Internationale Veröffentlichungsnummer: WO 2002/093285

(56) Entgegenhaltungen:
- DE-A- 3 739 824
- GB-A- 930 138
- GB-A- 1 422 165
- US-A- 2 802 484
- US-A- 2 983 279
- US-A- 3 642 021

## Beschreibung

Gegenstand der Erfindung ist eine Vorrichtung zum Regeln bzw. Steuern des Flusses von fliessfähigen Medien nach dem Oberbegriff des Anspruchs 1 und eine Verwendung dieser Vorrichtung nach dem Anspruch 11. Solche Vorrichtungen kommen unter anderem, aber nicht ausschliesslich, in der Sanitärtechnik zum Einsatz, wo sie die Zufuhr von Wasser zu einem Sanitärapparat steuern bzw. regeln. In ihrer einfachsten Ausführung dienen diese Vorrichtungen dazu, den Fluss kalten oder heissen Wassers, das einem Sanitärapparat zugeführt wird, zu beeinflussen. In ihren Weiterbildungen dienen die Vorrichtungen als sogenannte Mischer, welche das Mischverhältnis von Kaltwasser und Heisswasser bzw. deren Menge steuern oder regeln, und zwar so, dass Warmwasser von einer gewünschten Temperatur entsteht, die zwischen der Temperatur des Kaltwassers aus dem Netz und der Temperatur des Heisswassers aus einem Heisswasserbehälter liegt.

Derartige Mischer bzw. Mischverhältnis-Steuerungen sind aus der Sanitärtechnik in verschiedenen Ausführungsformen bekannt. Während die ursprünglich verwendeten Mischer rein mechanisch betätigt waren, werden seit einiger Zeit auch elektrisch gesteuerte Mischer verwendet. Solche elektrisch gesteuerte Mischer werden nach verschiedenen Prinzipien konstruiert. Bekannt sind insbesondere Mehrfachventil-Mischer, elektrisch gesteuerte Proportionalventil-Mischer und elektrisch gesteuerte mechanische Mischer.

Bei Mehrfachventil-Mischern wird das gewünschte Mischverhältnis von Medium und Zweitmedium durch eine kaskadierte Anordnung von Ventilen mit unterschiedlichen Durchflussquerschnitten erzielt. Diese Mischer haben zahlreiche Nachteile. Sie sind bezüglich Herstellung und Montage sehr aufwändig ohne ihre Funktion optimal zu erfüllen; insbesondere lassen sie sich nicht stufenlos steuern und zeigen verhältnismässig hohe Druckunterschiede an ihrem Ausgang.

Proportionalventil-Mischer sind eigentlich Ventile, welche die Durchflussmenge in Abhängigkeit von einer elektrischen Spannung steuern, wobei Proportionalventil-Mischer zwei solche Proportionalventile enthalten. Diese lassen sich stufenlos steuern oder regeln. Der Vorteil der Proportionalventil-Mischer liegt in ihrer Sicherheit; wird nämlich die Spannung beider Ventile unterbrochen, so sind die Ausgänge beider Proportionalventile geschlossen und es kann kein Medium zum Sanitärapparat gelangen. Ausserdem sind bei geschlossenen Ventilen das Medium und das Zweitmedium völlig voneinander getrennt. Der Nachteil der Proportionalventil-Mischer liegt, abgesehen von ihren hohen Herstellungskosten, darin, dass sie verhältnismässig hohe Arbeitsspannungen benötigen und im Betrieb verhältnismässig hohe Energiemengen konsumieren, weshalb sie sich nicht für Batteriebetrieb eignen.

Bei elektrisch gesteuerten mechanischen Mischern ist das Mischverhältnis von der Lage von Stellgliedern abhängig. Stellglieder sind beispielsweise zwei aufeinander liegende Platten, vorzugsweise aus einem keramischen Material, die relativ zueinander gedreht werden, oder ein in einem Zylinder verschiebbarer Kolben. Auch diese Ventile lassen sich stufenlos steuern und liefern einen weitgehend konstanten Ausgangsdruck. Für die Bewegung der Stellglieder werden untersetzte Elektromotoren benutzt.

Der Nachteil dieser Mischer liegt dann, dass der Energieaufwand für die Bewegung der Stellglieder Verhältnismässig hoch ist. Weiterbildungen solcher Vorrichtungen werden zur Steuerung bzw. zur Regelung des Mischverhältnisses zwischen dem Medium und einem Zweitmedium benutzt.

US 2,802,484 offenbart eine gattungsgemässe Vorrichtung zum Regeln des Flusses von fliessfähigen Medien, wie Heiss- und Kaltwasser. Diese Vorrichtung umfasst eine von zumindest einem Medium durchfliessbare Durchflusskammer. In einer Steuerkammer herrscht ein Steuerdruck. Über eine Zuführleitung gelangt ein Fluid zur Durchflusskammer und verlässt diese über eine Abführleitung. Mittels eines mit der Steuerkammer verbundenen Steuerventils wird der Steuerdruck in der Steuerkammer variiert. Ein in der Durchflusskammer beweglich angeordnetes Stellglied ist unter einer Stellkraft zwischen einer ersten Endlage und einer zweiten Endlage verstellbar und regelt mit seiner Stellung den Fluss der die Durchflusskammer durchfliessenden Medien. Dabei umfasst das Stellglied zumindest eine Wirkfläche, die in der Steuerkammer angeordnet ist. Zudem ist die Stellkraft die Resultante einer - von einem in der Steuerkammer herrschenden Druck abhängigen - Erst-Stellkraft und einer gegensinnig zu ihr wirkenden Zweit-Stellkraft. Der Mischzylinder kann aber nicht zum Verschliessen der Vorrichtung In Bezug auf alle Medien verwendet werden.

DE 37 39 824 A1 offenbart ein gattungsgemässes Druckregelventil mit einem Vorsteuerventil. Vom Hauptregelkoiben kann ein Verbraucheranschluss wahlweise mit einer Pumpe und einem Tank verbunden werden. Der Hauptregelkolben wird entgegen dem Steuerdruck vom Purripendruck belastet. Dieses Dokument offenbart somit eine Vorrichtung zum Regeln bzw. Steuern des Flusses von fliessfähigen Medlen, welche eine von zumindest einem Medium durchfliessbare Durchflusskammer und eine Steuerkammer, in welcher ein Steuerdruck herrscht umfasst. Ferner umfasst diese Vorrichtung eine Zuführleitung zum Zuführen zumindest eines Mediums zur Durchflusskammer, eine Abführleitung zum Abführen von Medium aus der Durchflusskammer, ein mit der Steuerkammer verbundenes Steuerventil zum Variieren des Steuerdruckes in der Steuerkammer und ein in der Durchflusskammer beweglich angeordnetes Stellglied, welches unter einer Stellkraft zwischen einer ersten Endlage und einer zweiten Endlage verstellbar ist, um den Fluss der die Durchflusskammer durchfliessenden Medien zu regeln. Dabei umfasst das Stellglied zumindest eine Wirkfläche, die in der Steuerkammer angeordnet ist, wobei die Stellkraft die Resultante einer von einem in der Steuerkammer herrschenden Druck abhängigen Erst-Stellkraft und von einer gegensinnig zu Ihr wirkenden Zweit-Stellkraft ist. Dabei ist die wirkfläche des Stellgliedes - zum Erzeugen der auf das Stellglied wirkenden Erst-Stellkraft in der Steuerkammer - mit diesem Medium beaufschlagt.

Der Erfindung liegt die Aufgabe zu Grunde, eine alternative Vorrichtung zur Verwendung in der Sanitärtechnik vorzuschlagen, mit welcher bei einfacher Bauweise der Fluss von zwei die Vorrichtung durchströmenden Medien mit minimaler Energiezuführung gesteuert werden kann.

Diese Aufgabe wird gemäss einem ersten Aspekt mit den Merkmalen des unabhängigen Anspruchs 1 und gemäss einem zweiten Aspekt mit den Merkmalen des Anspruchs 11 gelöst. Bevorzugte Weiterbildungen der erfindungsgemässen Vorrichtung sind durch die Ansprüche 2 bis 10, bevorzugte Weiterbildungen der erfindungsgemässen Verwendung durch den Anspruch 12 definiert.

Bei der erfindungsgemässen Vorrichtung handelt es sich somit um eine Vorrichtung zur Beeinflussung des Flusses eines sie durchströmenden fliessfähigen Mediums, welche als in der Sanltärtechnik verwendbarer Mischer gebaut ist, der eine Zuführleitung für ein Zweitmedium aufweist, welche in die als Mischkammer für das Medium mit dem Zweitmedium wirkende Durchflusskammer mündet. Die Energie, die dazu benötigt wird, setzt sich zusammen aus der Trigger-Energie, mit welcher die Funktionen der Vorrichtung initiiert und gesteuert werden, und aus der Aktions-Energie, mit welcher diese Funktionen der Vorrichtung ausgeführt werden. Die Trigger-Energle ist weitaus geringer als die Aktions-Energie. Einer der Basisgedanken der Erfindung ist darin zu sehen, dass möglichst nur die Trigger-Energie extern zugeführt und die Aktions-Energie aus dem Medium und allenfalls auch aus einem Zweitmedium geschöpft wird. Diese Anordnung erlaubt es, die Menge des aus der Durchflusskammer strömenden Mediums im Wesentlichen stufenlos und mit einem minimalen Aufwand an extern zuzuführender Energie, nämlich der Trigger-Energie, zu steuern.

Im Unterschied zu US 2,802,484 ist das gemäss der vorliegenden Erfindung eingesetzte Steuermedium zugleich auch das Medium, welches abgegeben bzw. gemischt werden soll.

Der Verzicht auf die Benutzung externer Aktions-Energie hat ausserdem den Vortell, dass die erfindungsgemässe Vorrichtung im Aufbau verhältnismässig einfach ist, da sich konstruktive Massnahmen für eine Zufuhr von externer Aktions-Energie erübrigen. Die Steuerorgane können als elektrisch, hydraulisch oder pneumatisch betätigbare Steuerventile ausgebildet sein oder manuell, beispielsweise über Taster, betätigbar sein. Wird als Steuerorgan ein elektrisch betätigtes Steuerventil benutzt, so kann die erfindungsgemässe Vorrichtung in Folge ihres geringen Verbrauches an Trigger-Energie und des Verzichtes auf exteme Aktionsenergie ohne Weiteres im Batteriebetrieb verwendet werden.

Weitere Merkmale der Erfindung werden Im Folgenden an Hand von bevorzugten Ausführungsbeispielen unter Bezug auf die Zeichnung, die alle als vereinfachte schematische Darstellungen ausgeführt sind, beschrieben. Es zeigen:
- Fig. 1: eine als Fluss-Steuerung für ein Medium konzipierte Vorrichtung zum Erläutern des Prinzips der Erfindung, mit zwei elektrischen Steuerventilen als Steuerorganen, mit Schliessung des Ausganges aus der Durchflusskammer in einer Endlage des Stellgliedes;
- Fig. 2A: eine erste als Mischverhältnis-Steuerung konzipierte Vorrichtung nach der Erfindung, mit elektrischen Steuerventilen, mit dem Stellglied in seiner einen Endlage;
- Fig. 2B: die in Fig. 2A dargestellte Mischverhältnis-Steuerung, mit dem Stellglied in einer Zwischenlage;
- Fig. 2C: die in den Fig. 2A und 2B dargestellte Mischverhältnis-Steuerung, mit dem Stellglied in einer weiteren Zwischenlage;
- Fig. 2D: die in den Fig. 2A bis 2C dargestellte Mischverhältnis-Steuerung, mit dem Stellglied in seiner anderen Endlage;
- Fig. 3A: eine zweite erfindungsgemässe Vorrichtung ;
- Fig. 3B: eine optionale Einzelheit der Fig. 3A, in vergrössertem Massstab;
- Fig. 4: eine dritte Vorrichtung nach der Erfindung, mit elektrischen Steuerventilen und mit einer Anordnung zur Ermittlung der Position des Stellgliedes;
- Fig. 5: eine vierte Vorrichtung nach der Erfindung, mit einer anderen Anordnung zur Ermittlung der Position des Stellgliedes;
- Fig. 6: eine fünfte Vorrichtung nach der Erfindung, in einer kompakten Ausführungsform;
- Fig. 7: eine weitere Vorrichtung nach der Erfindung, mit Steuerorganen, die ohne elektrische Energie arbeiten.

In der nachfolgenden Beschreibung werden funktionell gleiche oder ähnliche konstruktive Elemente mit gleichen Bezugszeichen versehen, auch wenn sie im einzelnen unterschiedlich ausgebildet oder nicht detailliert beschrieben sind. Angaben wie ,rechts', 'links' und Ähnliches sind willkürlich gewählt und beziehen sich auf die Anordnungen der Vorrichtung in den jeweiligen Figuren.

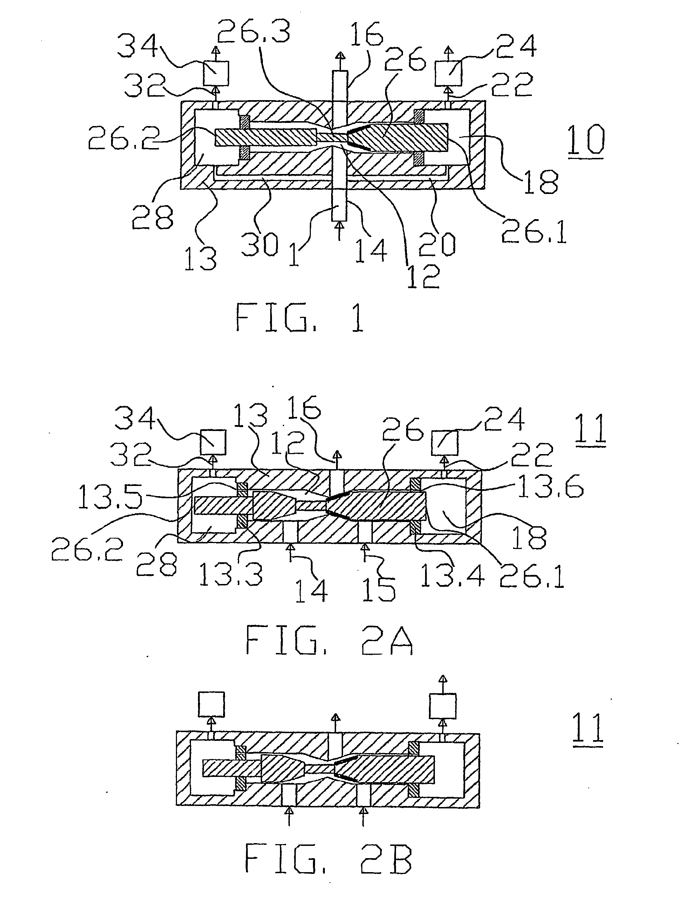

Figur 1 zeigt eine Vorrichtung 10 mit einer Durchflusskammer 12, die in einem Durchflussgehäuse 13 eingeschlossen ist und die vom Medium 1 durchströmt wird. Eine Zuführleitung 14 für das Medium 1 mündet in die Durchflusskammer 12. Stromaufwärts ist die Zuführleitung 14 in nicht dargestellter Weise mit einem Behälter oder einem Verteilnetz für das Medium 1 verbunden. Eine Abführleitung 16 für das Medium 1 mündet aus der Durchflusskammer 12 und endet beispielsweise bei einem nicht dargestellten Verbraucher, das heisst zum Beispiel einem Sanitärapparat. Im Durchflussgehäuse 13 ist im Weiteren eine Steuerkammer 18 enthalten, welche über eine Verbindungsleitung 20 mit der Zuführleitung 14 kommuniziert, so dass die Steuerkammer 18 mit dem Medium 1 beaufschlagt ist. Über eine Steuerleitung 22 ist ein, ein Steuerorgan 24 bildendes Steuerventil, das ebenfalls mit 24 bezeichnet ist, mit der Steuerkammer 18 verbunden. Das schon erwähnte Stellglied 26 ist so im Durchflussgehäuse 13 aufgenommen, dass es unter einer Stellkraft stufenlos zwischen einer ersten, nicht dargestellten Endlage und einer zweiten Endlage über Zwischenlagen, von denen eine in Fig. 1 dargestellt ist, verschoben werden kann. Die Stellkraft ist die Resultierende einer Erst-Stellkraft und einer Zweit-Stellkraft, die in entgegengesetzten Richtungen auf die Wirkflächen 26.1, 26.2 des Stellgliedes 26 wirken. Die Erst-Stellkraft wird durch den in der Steuerkammer 18 herrschenden Druck verursacht, der durch das Steuerventil 24 bestimmt wird und der auf die Endfläche 26,1 wirkt, die Zweit-Stellkraft wird durch den Druck in einer Zusatzsteuerkammer 28 bestimmt, welche über eine Zusatzverbindungsleitung 30 mit der Zuführleitung 14 kommuniziert und so ebenfalls mit dem Medium 1 beaufschlagt ist. Die Stellkraft bestimmt letztlich die Lage, die das Stellglied 26 einnimmt. Der mittlere Bereich 26.3 des Stellgliedes 26 und der mittlere Bereich der Durchflusskammer 12, wo die Zuführleitung 14 und die Abführleitung 16 münden, ist konisch geformt. Damit wird erreicht, dass in Schliessstellungen der Sitz verbessert wird. Im Weiteren entsteht ein Strömungskanal der eine ungestörtere Strömung zulässt. Dadurch werden Schwingungen und in deren Folge entstehende Geräusche und Abnützungserscheinungen weitgehend vermieden. Die Lage des Stellgliedes 26 bestimmt die Durchflussquerschnitte für das Medium 1 und damit bei einem gegebenen Druck in der Zuführleitung 14 auch die zeitliche Menge bzw. den Fluss des aus der Durchflusskammer 12 strömenden Mediums 1. Im Weiteren ist die Zusatzsteuerkammer 28 über eine Zusatzsteuerleitung 32 mit einem ein Steuerorgan bildenden Zusatzsteuerventil 34 verbunden. Obwohl die Drücke in der Steuerkammer 18 und der Zusatzsteuerkammer 28 gleich sind, sind die Erst-Stellkraft und die Zweit-Stellkraft wegen der unterschiedlichen Abmessungen der Wirkflächen 26.1, 26.2 nicht gleich. Somit wird mit geschlossenen Steuerorganen 24, 34 das Stellglied 26 in eine definitive Schliessstellung gebracht. Alternativ zur Darstellung In Fig. 1 kann die Zwelt-Stellkraft durch den Druck einer Feder auf die Wirkfläche 26.2 verursacht werden (nicht dargestellt). Während in der Figur 1 eine Vorrichtung zum Steuern bzw. zum Regeln des aus der Durchflusskammer 12 strömenden Flusses eines einzigen Mediums 1 zum Erläutern des der Erfindung zu Grunde liegenden, aus dem Stand der Technik an sich bekannten Prinzips dargestellt ist, sind in allen weiteren Figuren erfindungsgemässe, in der Sanltärtechnik verwendbarer Mischer 11 zum Steuern des Mischungsverhältnisses des Mediums 1 mit einem Zweitmedium 2 gezeigt.

Die Figuren 2A bis 2D zeigen einen Mischer 11 nach der Erfindung, wobei das Stellglied 26 in jeder der Fig. 2A bis 2D eine andere Lage einnimmt. Bei diesem Mischer 11 sind die Durchfluss- bzw. Mischkammer 12, die Steuerkammer 18 und die Zusatzsteuerkammer 28 im Durchflussgehäuse 13 angeordnet. Die Zuführleitung 14 für das Medium 1, die Zuführleitung 15 für das Zweitmedium 2, die Abführleitung 16 für das Mischmedium 3, die Steuerleitung 22, das Steuerventil 24, die Zusatzsteuerleitung 32 und das Zusatzsteuerventil 34 sind wie weiter oben beschrieben angeordnet. Das Zusammenspiel von Erst- und Zweitstellkraft wurde dort ebenfalls schon beschrieben. Die Steuerkammer 18 und die Zusatzsteuerkammer 28 werden von der Durchfluss- bzw. Mischkammer 12 aus beaufschlagt. Konstruktiv wird dies erreicht, Indem in Dichtungskörper 13.3, 13.4, die hier im Durchflussgehäuse befestigt sind, Bohrungen 13.5, 13.6 eingearbeitet sind. Das Stellglied 26 ist in der Art eines Doppelkolbens ausgeführt, mit zwei in entgegengesetzten Richtungen zulaufenden Kolbenkörpern mit unterschiedlichen Wirkflächen 26.1, 26.2, so dass der Mischer 11 in dieser Beziehung asymmetrisch ist. Diese Asymmetrie hat zur Folge, dass bei geschlossenem Steuerventil 24 und geschlossenem Zusatzsteuerventil 34 das Stellglied 26 in die in Fig. 2A dargestellte Lage geht und dort verharrt, so dass die Mischkammer 12 von der Zuführleitung 15 für das Zweitmedium 2 und von der Abführleitung 16 für das Mischmedium 3 getrennt ist. Hierbei ist der Mischer 11 In seiner Schliessstellung.

Wird dann das Steuerventil 24 geöffnet, so gelangt das Stellglied 26 zunächst in die in Fig. 2B dargestellte Lage; hierbei ist die Mischkammer 12 noch von der Zuführleitung 15 für das Zweitmedium 2 getrennt, aber die Abführleitung 16 ist über die Durchfluss- bzw. Mischkammer 12 mit der Zuführleitung 14 für das Medium 1 verbunden; die Abführleitung 16 führt somit nur das Medium 1.

Eine weitere Verschiebung des Stellgliedes 26 wird durch eine Änderung des Steuerdruckes in der Steuerkammer 18 und oder in der Zusatzsteuerkammer 28 bewerkstelligt. Das Stellglied 26 gelangt somit in Funktion des Steuerdruckes in eine Lage entsprechend Fig. 2C bzw. 2D. Hierbei sind sowohl die Zuführleitung 14 für das Medium 1 wie auch die Zuführleitung 15 für das Zweitmedium 2 über die Durchfluss- bzw. Mischkammer 12 mit der Abführleitung 16 für das Mischmedium 3 verbunden. Das Mischverhältnis zwischen dem Medium 1 und dem Zweitmedium 2 wird von der jeweiligen Lage des Stellgliedes 26 bestimmt. Werden sowohl das Zusatzsteuerventil 34 wie auch das Steuerventil 24 geöffnet, so verharrt das Stellglied 26 in seiner Lage, da die Steuerkammer 18 und die Zusatzsteuerkammer 28 drucklos sind. Die Einrichtung gemäss den Fig. 2A bis 2D verfügt somit über eine Schliessfunktion, wobei aber der Schliessmechanismus gewissermassen integriert ist, so dass keine zusätzliche Baueinheit, beispielsweise ein Ventil oder eine andere Schliesseinheit, erforderlich sind. Ein weiterer Vorteil dieses Mischers 11 liegt darin, dass im geschlossenen Zustand die Zuführleitung 14 für das Medium 1 und die Zuführleitung 15 für das Medium 2 getrennt sind; eine solche Medientrennung ist beispielsweise in der Sanitärtechnik in einigen Ländern vorgeschrieben.

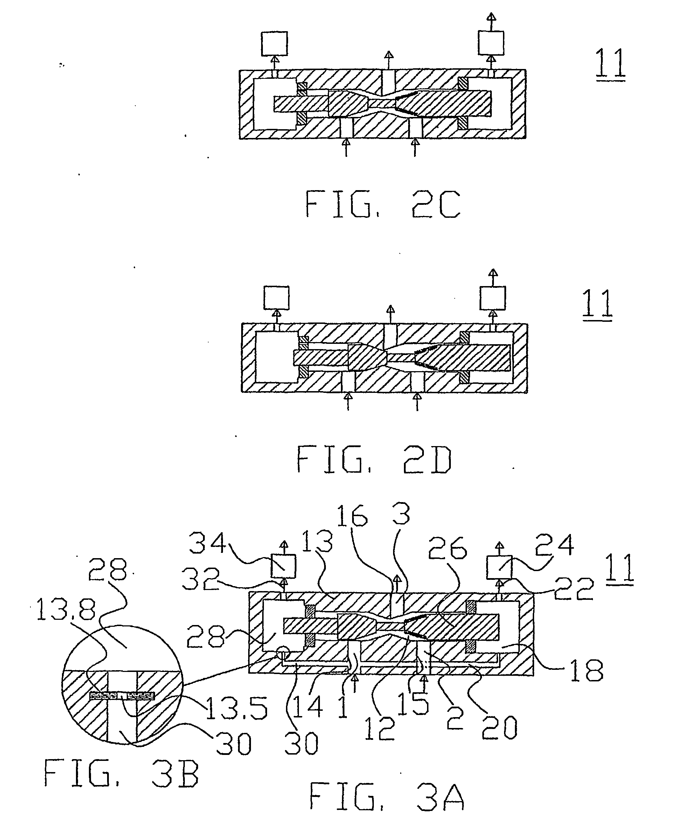

Die Figuren 3A und 3B zeigen einen Mischer 11 mit gleicher Wirkungsweise und nahezu gleichem Aufbau wie der mit Bezug auf die Fig. 2A bis 2D beschriebenen Mischer. Ein wesentlicher Unterschied besteht darin, dass die Steuerkammer 18 über eine Verbindungsleitung 20 und die Zusatzsteuerkammer 28 über ein Zusatzverbindungsleitung 30 mit der Zuführleitung 14 kommuniziert, so dass die Steuerkammer 18 und die Zusatzsteuerkammer 28 mit dem Medium 1 beaufschlagt sind. Ein weiterer Unterschied besteht darin, dass der Mündungsbereich der Zusatzverbindungsleitung 30 (vgl. Fig. 3B) einen flexiblen Ring 13.8 mit einer den Fluss in die Zusatzsteuerkammer 28 reduzierenden Bohrung 13.5 aufweist.

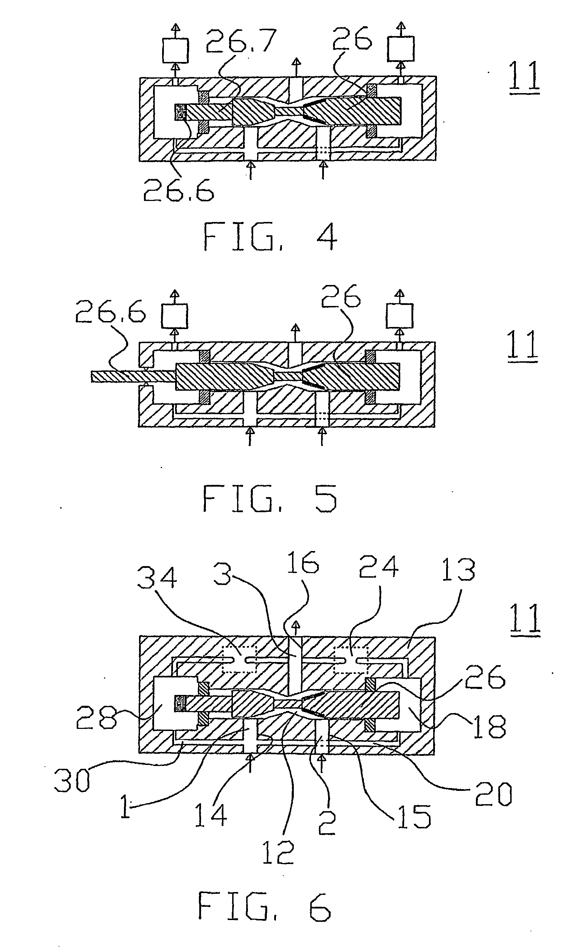

Figur 4 zeigt denselben Mischer wie Fig. 3, jedoch mit einem am Stellglied 26 angeordneten Positionselement 26.6, welches an einer Positionsstange 26.7 befestigt ist. Das Positionselement 26.6 erlaubt es, die jeweilige Lage des Stellgliedes 26 von Aussen zu detektieren bzw. zu messen. Während die weiter oben beschriebenen Mischer ausschliesslich Steuerungen bilden, kann der Mischer 11 gemäss Fig. 4 als Regelvorrichtung benutzt werden, wobei die gemessene Lage des Stellgliedes 26 als Messgrösse betrachtet werden kann. Eine Regelung kann auch durchgeführt werden, indem zum Beispiel der Druck in der Zusatzsteuerkammer 28 oder das Mischungsverhältnis in der Abführleitung 16 gemessen wird. Diese Ausführung der Anordnung zum Detektieren der Position des Stellgliedes 26 hat den Vorteil, dass keine zusätzlichen Dichtungsprobleme entstehen, da kein bewegtes Bauteil durch eine Gehäusewand geführt werden muss.

In Figur 5 ist ein Mischer 11 dargestellt, der eine Regelung erlaubt und sich vom Mischer der Fig. 4 dadurch unterscheidet, dass zur Detektierung bzw. Messung der Lage des Stellgliedes 26 die am Stellglied 26 befestigte Positionsstange 26.7 aus dem Durchflussgehäuse 13 nach aussen geführt ist. Bei einer solchen Anordnung können die beiden Kolbenteile des Stellgliedes 26 gleich dimensioniert werden, da die entsprechende Asymmetrie der Wirkflächen durch die Positionsstange 26.7 zu Stande kommt.

Figur 6 zeigt einen für viele Verwendungszwecke bevorzugten Mischer 11, der gleich wirkt und ähnlich, jedoch kompakter aufgebaut ist als der Mischer gemäss Fig. 5. Das Steuerventil 24 und das Zusatzsteuerventil 34 sind hierbei integral am bzw. im Durchflussgehäuse 13 angeordnet. Dies erleichtert den Einbau des Mischers und insbesondere auch den Austausch eines defekten Mischers. Vorzugsweise werden in den Verbindungsleitungen 20, 30 flexible Ringe eingebaut, wie sie mit Bezug auf Fig. 3B beschrieben sind. Die Steuerkammer 18 kann auch über eine Verbindungsleitung 20 und die Zusatzsteuerkammer 28 über ein Zusatzverbindungsleitung 30 mit der Zuführleitung 15 kommunizieren, so dass die Steuerkammer 18 und die Zusatzsteuerkammer 28 mit dem Medium 2 beaufschlagt sind (im Unterschied zu Fig. 3A).

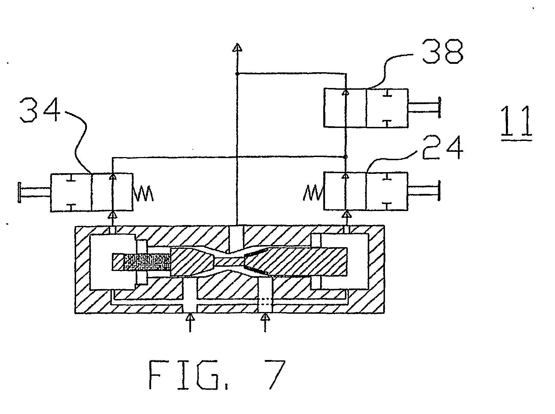

Schliesslich zeigt die in Figur 7 dargestellte Vorrichtung nach der Erfindung einen Mischer, der keiner elektrischen Energie bedarf, da die Steuerorgane hydraulische oder pneumatische Taster aufweisen. Die Notwendigkeit einer Instailation zur Zufuhr elektrischer Energie, zum Beispiel einer Batterie, entfällt hierbei; die Vorrichtung muss daher auch nicht auf die Erschöpfung einer solchen Batterie überwacht werden. Hierbei sind wiederum zwei Steuerorgane 24, 34 vorgesehen, bei deren Betätigung die aus der Vorrichtung 11 austretende zeitliche Menge gesteigert bzw. vermindert wird. Ein drittes Steuerorgan 38 dient als Ein/Aus-Schalter.

Die oben beschriebenen Vorrichtungen bilden nur eine kleine Auswahl aus den erfindungsgemäss möglichen Ausführungen der Erfindung. Einzelne Bauteile, die nur mit Bezug auf einige der Ausführungsbeispiele beschrieben und dargestellt sind, können auch bei den anderen Ausführungsbeispielen verwendet werden; dies gilt insbesondere für die Art der Steuerorgane, die Erzeugung der Zweit-Stellkraft ohne Zusatzsteuerkammer und die Zufuhr des Mediums zu den Steuerkammern. Ferner kann in einer medienbeaufschlagten Steuerkammer zusätzliche eine Feder vorgesehen sein.

## Patentansprüche

1. Vorrichtung (11) zum Regeln bzw. Steuern des Flusses von fliessfähigen Medien (1,2), umfassend:
- eine von zumindest einem ersten Medium (1) durchfliessbare Durchflusskammer (12),
- eine Steuerkammer (18), in welcher ein Steuerdruck herrscht,
- eine Zuführleitung (14) zum Zuführen dieses zumindest einen Medium (1) zur Durchflusskammer (12),
- eine Abführleitung (16) zum Abführen von Medium (1,3) aus der Durchflusskammer (12),
- ein mit.der Steuerkammer (18) verbundenes Steuerventil (24) zum Variieren des Steuerdruckes in der Steuerkammer (18),
- ein in der Durchflusskammer (12) beweglich angeordnetes Stellglied (26), welches unter einer Stellkraft zwischen einer ersten Endlage und einer zweiten Endlage verstellbar ist, um den Fluss der die Durchflusskammer (12) durchfliessenden Medien zu regeln, wobei das Stellglied (26) zumindest eine Wirkfläche (26.1) umfasst, die in der Steuerkammer (18) angeordnet ist, und wobei die Stellkraft die Resultante einer - von einem in der Steuerkammer (18) herrschenden Druck abhängigen - Erst-Stellkraft und einer gegensinnig zu ihr wirkenden Zweit-Stellkraft ist, wobei die Wirkfläche (26.1) des Stellgliedes (26) - zum Erzeugen der auf das Stellglied (26) wirkenden Erst-Stellkraft in der Steuerkammer (18) - mit diesem ersten Medium (1) beaufschlagt ist, wobei die Vorrichtung (11) als in der Sanitärtechnik verwendbarer Mischer gebaut ist, der eine Zuführleitung (15) für ein Zweitmedium (2) aufweist, welche in die als Mischkammer für das erste Medium (1) mit dem Zweitmedium (2) wirkende Durchflusskammer (12) mündet.

2. Vorrichtung (11) nach Anspruch 1, **dadurch gekennzeichnet, dass** in einer Endlage des Stellgliedes (26) die Vorrichtung (11) für alle Medien (1,2,3) verschlossen ist.

3. Vorrichtung (11) nach Anspruch 1 oder 2, **dadurch gekennzeichnet, dass** das Stellglied (26) als Doppelkolben, mit zwei in entgegengesetzten Richtungen zulaufenden Kolbenkörpern ausgeführt ist.

4. Vorrichtung (11) nach einem der vorhergehenden Ansprüche, **dadurch gekennzeichnet, dass** die Steuerkammer (18) und damit auch die Wirkfläche (26.1) des Stellglieds (26) über eine von der Zuführleitung (14) abzweigende Verbindungsleitung (20) mit dem Medium (1) beaufschlagt ist.

5. Vorrichtung (11) nach einem der Ansprüche 1 bis 3, **dadurch gekennzeichnet, dass** sie zur Erzeugung der Zweit-Stellkraft auf das Stellglied (26) eine Zusatzsteuerkammer aufweist und die Steuerkammern (18,28) über einen aus der Durchfluss- bzw. Mischkammer (12) mündenden Kanal (13.5,13.6) mit dem ersten Medium (1,2) beaufschlagt sind.

6. Vorrichtung (11) nach einem der vorhergehenden Ansprüche, **dadurch gekennzeichnet, dass** sie zur Erzeugung der Zweit-Stellkraft auf das Stellglied (26) eine mechanische Anordnung, beispielsweise eine Feder, aufweist.

7. Vorrichtung (11) nach einem der Ansprüche 1 bis 5, **dadurch gekennzeichnet, dass** sie zur Erzeugung der Zweit-Stellkraft auf das Stellglied (26) eine Zusatzsteuerkammer (28) aufweist, welche mit der Zuführleitung (14) kommuniziert, und welche über eine Zusatzsteuerleitung (32) mit einem Zusatzsteuerorgan (34) verbunden ist.

8. Vorrichtung (11) nach einem der vorhergehenden Ansprüche, **dadurch gekennzeichnet, dass** das Steuerorgan (24) und/oder das Zusatzsteuerorgan (34) elektrisch betätigbar, fluidbetätigbar oder manuell betätigbar ist.

9. Vorrichtung (11) nach einem der vorhergehenden Ansprüche, **dadurch gekennzeichnet, dass** mindestens eine der Leitungen einen flexiblen scheibenartigen Körper (13.8) mit einer Durchbrechung (13.5) aufweist, welcher sich bel strömendem Medium deformiert.

10. vorrichtung (11) nach einem der vorhergehenden Ansprüche, **dadurch gekennzeichnet, dass** sie eine Siensorvorrichtung (26.6, 26.7) aufweist, um die Lage des Stellgliedes (26) und/oder den Druck in der Steuerkammer (18) und/oder der Zusatzsteuerkammer (28) zu ermitteln und die hierbei ermittelten Werte in den Steuerorganen (24, 34) zu verwerten.

11. Verwendung der Vorrichtung (11) nach einem der vorhergehenden Ansprüche in der Sanitärtechnik **dadurch gekennzeichnet, dass** die Abführleitung (16) in eine Abgabearmatur mündend eingebaut wird.

12. Verwendung nach Anspruch 11, **dadurch gekennzeichnet, dass** die Abgabearmatur eine Armatur eines Wasch- oder Spültisches, eines Bidets, einer Dusche, einer Wanne oder einer Apparatur des Medizinalbereiches ist.

## Claims

1. Device (11) for regulating or controlling the flow of free-flowing media (1,2) comprising:
- a flow chamber (12) through which at least one first medium (1) can flow,
- a control chamber (18) in which a control pressure reigns,
- an input channel (14) for feeding this at least one free-flowing medium (1) into the flow chamber (12),
- an output duct (16) for evacuation of medium (1, 3) from the flow chamber (12),
- a control valve (24) connected to the control chamber (18) to vary the control pressure in the control chamber (18),
- a movable regulator element (26) located inside the flow chamber (12) which can be displaced by a regulating effort between a first end position and a second end position in order to regulate the flow of the free-flowing media through the flow chamber (12), the regulator element (26) comprising at least one actuating surface (26.1) located in the control chamber (18), and the regulating effort being the resultant of a first regulating effort dependant on a pressure reigning in the control chamber (18) and second regulating effort acting in the opposite direction, the actuating surface (26.1) of the regulator element (26) being impinged upon by this first medium (1) in order to generate this first regulating force acting upon the regulator element (26) in the control chamber (18),
the device (11) being constructed as a mixer for use in the sanitary field and displaying an input duct (15) for a second medium (2) opening into the flow chamber (12) which serves as a mixing chamber for mixing the first medium (1) with the second medium (2).

2. Device (11) according to Claim 1, **characterized in that** in one end position of the regulator element (26), the device (11) is closed to all media (1, 2, 3).

3. Device (11) according to Claim 1 or 2, **characterized in that** the regulator element (26) is made as a double piston with two piston barrels acting in opposite directions.

4. Device (11) according to any one of the above Claims, **characterized in that** the control chamber (18) and with it also the actuating surface (26.1) of the regulator element (26) is impinged upon by the medium (1) through a connection duct (20) branching off the input duct (14).

5. Device (11) according to any one of Claims 1 to 3, **characterized in that** it displays a supplementary control chamber to generate the second regulating force acting on the regulator element (26) and the control chambers (18, 28) are impinged upon by the media (1, 2) through a channel (13.5, 13.6) opening out of the flow- or mixing chamber (12).

6. Device (11) according to any one of the above Claims, **characterized in that** it displays a mechanical device, for example a spring, to generate the second regulating force acting on the regulator element (26).

7. Device (11) according to any one of Claims 1 to 5, **characterized in that** to generate the second regulating force acting on the regulator element (26), it displays a supplementary control chamber (28) communicating with the input duct (14) and connected to a supplementary control element (34) through a supplementary duct (32).

8. Device (11) according to any one of the above Claims, **characterized in that** the control element (24) and/or the supplementary control element (34) can be actuated electrically, by fluid action or manually.

9. Device (11) according to any one of the above Claims, **characterized in that** at least one of the ducts displays a flexible disc-type element (13.8) provided with an aperture, which is deformed by the flow of medium.

10. Device (11) according to any one of the above Claims, **characterized in that** it displays a sensor device (26.6, 26.7) designed to detect the position of the regulator element (26) and/or the pressure in the control chamber (18) and/or the supplementary control chamber (28) and to utilize the values so obtained in the control elements (24, 34).

11. Use of the device (11) according to any one of the above Claims in the sanitary field, **characterized in that** the output channel (16) is constructed opening into an output fitting.

12. Use according to Claim 11, **characterized in that** the output fitting may be the fitting of a washbasin or sink, a bidet, shower, bathtub or apparatus in the medical field.

## Revendications

1. Dispositif (11) pour réguler ou commander le débit de milieux fluides (1, 2), comprenant :
- une chambre de passage (12) pouvant être traversée par au moins un premier milieu (1),
- une chambre de commande (18) dans laquelle règne une pression de commande,
- une conduite d'amenée (14) destinée à amener ce milieu (1), au moins au nombre de un, vers la chambre de passage (12),
- une conduite de décharge (16) destinée à évacuer le milieu (1, 3) de la chambre de passage (12),
- une soupape de commande (24) reliée à la chambre de commande (18), permettant de faire varier la pression de commande dans la chambre de commande (18),
- un organe de réglage (26) disposé de façon mobile dans la chambre de passage (12), qui peut être réglé sous une puissance de réglage entre une première position d'extrémité et une seconde position d'extrémité pour réguler le débit des milieux traversant la chambre de passage (12),
dans lequel l'organe de réglage (26) comprend au moins une surface active (26.1) qui est disposée dans la chambre de commande (18), et dans lequel la puissance de réglage est la résultante d'une première puissance de réglage - qui dépend d'une pression qui règne dans la chambre de commande (18) - et d'une seconde puissance de réglage agissant à l'opposé, la surface active (26.1) de l'organe de réglage (26) - pour générer dans la chambre de commande (18) la première puissance de réglage agissant sur l'organe de réglage (26) - étant chargée par ce premier milieu (1), et dans lequel le dispositif (11) est construit comme un mitigeur, utilisable dans la technique des sanitaires, qui présente une conduite d'amenée (15) pour un second milieu (2), laquelle débouche dans la chambre de passage (12) qui agit comme une chambre de mélange du premier milieu (1) avec le second milieu (2).

2. Dispositif (11) selon la revendication 1, **caractérisé en ce que** dans une position finale de l'organe de réglage (26), le dispositif (11) est fermé à tous les milieux (1, 2, 3).

3. Dispositif (11) selon la revendication 1 ou 2, **caractérisé en ce que** l'organe de réglage (26) est exécuté comme un piston double comportant deux corps de piston arrivant dans des directions opposées.

4. Dispositif (11) selon l'une des revendications précédentes, **caractérisé en ce que** la chambre de commande (18), et par conséquent aussi la surface active (26.1) de l'organe de réglage (26), sont chargées avec le milieu (1) par une conduite de liaison (20) dérivant de la conduite d'amenée (14).

5. Dispositif (11) selon l'une des revendications 1 à 3, **caractérisé en ce qu'**il présente, pour générer la seconde puissance de réglage sur l'organe de réglage (26), une chambre de commande supplémentaire, et **en ce que** les chambres de commande (18, 28) sont chargées en premier milieu (1, 2) via un canal (13.5, 13.6) débouchant depuis la chambre de passage ou la chambre de mélange (12).

6. Dispositif (11) selon l'une des revendications précédentes, **caractérisé en ce qu'**il présente, pour générer la seconde puissance de réglage sur l'organe de réglage (26), un dispositif mécanique, par exemple un ressort.

7. Dispositif (11) selon l'une des revendications 1 à 5, **caractérisé en ce qu'**il présente, pour générer la seconde puissance de réglage sur l'organe de réglage (26), une chambre de commande supplémentaire (28) qui communique avec la conduite d'amenée (14), et qui est reliée par une conduite de commande supplémentaire (32) à un organe de commande supplémentaire (34).

8. Dispositif (11) selon l'une des revendications précédentes, **caractérisé en ce que** l'organe de commande (24) et/ou l'organe de commande supplémentaire (34) peut(peuvent) être actionné(s) électriquement, par un fluide ou manuellement.

9. Dispositif (11) selon l'une des revendications précédentes, **caractérisé en ce qu'**au moins une des conduites présente un corps flexible en forme de disque (13.8) qui comporte un perçage (13.5) qui se déforme lorsque le milieu s'écoule.

10. Dispositif (11) selon l'une des revendications précédentes, **caractérisé en ce qu'**il présente un dispositif à capteur (26.6, 26.7) permettant de déterminer la position de l'organe de réglage (26) et/ou la pression dans la chambre de commande (18) et/ou dans la chambre de commande supplémentaire (28), et d'utiliser les valeurs alors déterminées dans les organes de commande (24, 34).

11. Utilisation du dispositif (11) selon l'une des revendications précédentes dans la technique des appareils sanitaires, **caractérisée en ce que** la conduite de décharge (16) est intégrée de façon débouchante dans une armature de distribution.

12. Utilisation selon la revendication 11, **caractérisée en ce que** l'armature de distribution est une armature d'un lavabo ou d'un évier, d'un bidet, d'une douche, d'une baignoire ou d'un appareil du domaine médical.
